# EUROPÄISCHE PATENTSCHRIFT

(11) **EP 0 959 395 B1**
(45) Veröffentlichungstag und Bekanntmachung des Hinweises auf die Patenterteilung: **21.02.2007**
(21) Anmeldenummer: 99108554.9
(22) Anmeldetag: 05.05.1999
(51) Int. Cl.: G05B 13/02

(54) **Verfahren zur Regelung einer Regelgrösse**
Method for regulating a controlled variable
Procédé pour la commande d'une grandeur de réglage

(30) Priorität: 22.05.1998 DE 19823096
(43) Veröffentlichungstag der Anmeldung: 24.11.1999
(73) Patentinhaber: ATMEL Germany GmbH, 74072 Heilbronn (DE)
(72) Erfinder: Gropper, Karl-Josef, 89250 Senden (DE); Knotz, Herbert, 89155 Erbach (DE)

(56) Entgegenhaltungen:
- EP-A- 0 360 206
- EP-A- 0 448 776
- EP-A- 0 572 244
- US-A- 4 839 573
- US-A- 5 406 474
- US-A- 5 587 896

## Beschreibung

Die Erfindung betrifft ein Verfahren zur Regelung einer Regelgröße gemäß dem Oberbegriff des Patentanspruchs 1.

Bei einem Regelverfahren wird mittels eines Regelkreises aus einer das Regelverhalten beeinflussenden Regeleinrichtung und einer eine Rückkopplung bewirkenden Regelstrecke der Istwert einer Regelgröße die zu regelnde physikalische Größe mit einer dem Sollwert der Regelgröße entsprechenden Führungsgröße verglichen und eine Abweichung zwischen Sollwert und Istwert der Regelgröße mit Hilfe einer auf die Regelgröße einwirkenden Stellgröße minimiert.

Ein derartiges Verfahren ist aus der Druckschrift EP 0572244 A2 bekannt. Darin wird ein Regelverfahren zur Regelung einer Flüssigkeitsmenge offenbart, bei dem ein optimaler Verstärkungsfaktor als Funktion tatsächlichen Überschwingwertes einer Regelvorrichtung und eines vorgegebenen Überschwingwertes bestimmt wird.

Ein weiteres Verfahren ist aus der Druckschrift GB A 1306516 bekannt. Das offenbarte Regelverfahren erkennt ein übermäßiges Überschwingen einer elektrischen Regelgröße und reduziert unmittelbar nachfolgend die Gesamtverstärkung der Regelanordnung.

Bei einem Regelkreis zweiter oder höherer Ordnung kann der Istwert der Regelgröße infolge eines Sprungs der Führungsgröße über den Sollwert überschwingen. Hierbei erweist es sich als nachteilig, dass das Einschwingverhalten des Regelkreises von Temperatureinflüssen und Degradationserscheinungen abhängig ist. Diese Abhängigkeit kann zu einem langsamen Einschwingen oder zu einem instabilen Arbeitspunkt führen, in welchem die Regelgröße bereits durch geringe Störungen zum Schwingen angeregt wird.

Der Erfindung liegt die Aufgabe zugrunde, ein einfaches Verfahren gemäß dem Oberbegriff des Patentanspruchs 1 anzugeben, bei dem diese Nachteile vermieden werden und das demgegenüber vorteilhafte Eigenschaften aufweist.

Die Aufgabe wird erfindungsgemäß durch die Merkmale im Kennzeichen des Patentanspruchs 1 gelöst. Vorteilhafte Ausgestaltungen und Weiterbildungen ergeben sich aus den Unteransprüchen.

Die Erfindung sieht vor, daß die Schielfenverstärkung des Regelkreises, d.h. die Gesamtverstärkung im Signalpfad des Regelkreises, geregelt wird, wobei die Regelung der Schleifenverstärkung derart durchgeführt wird, daß der Istwert der Regelgröße bei einer impulsförmigen Änderung der Führungsgröße um einen vorgegebenen Toleranzwert über den Sollwert der Regelgröße überschwingt.

Vorzugsweise wird die Schleifenverstärkung des Regelkreises durch Variation der Verstärkung eines im Regelkreis die Schleifenverstärkung des Regelkreises mitbestimmenden Regelverstärkers geregelt, der hierzu durch einen Verstärkungsregler entsprechend angesteuert wird.

In einer vorteilhaften Ausgestaltung des Verfahrens wird die zur Regelung der Regelgröße erforderliche Regelabweichung mittels einer Sollwertvergleichsstufe bestimmt, welche eine Regelabweichgröße bildet, die der Differenz zwischen der Führungsgröße und dem Istwert der Regelgröße entspricht. Im Verstärkungsregler wird die Regelabweichgröße mit dem Toleranzwert verglichen und die Schleifenverstärkung des Regelkreises daraufhin nach Maßgabe des Ergebnisses dieses Vergleichs gesteuert.

Der Toleranzwert wird vorzugsweise durch die Führungsgröße vorgegeben, wobei es sich als besonders vorteilhaft erweist, den Toleranzwert bei einer Änderung der Amplitude der Führungsgröße proportional zu dieser Änderung zu variieren.

Die Vorteile des erfindungsgemäßen Verfahrens bestehen darin, daß
- die Schleifenverstärkung und somit das Regelverhalten des Regelkreises unabhängig von Temperatureinflüssen und Degradationserscheinungen sind,
- keine Notwendigkeit besteht, am Regelkreis bei der Inbetriebnahme oder während des Betriebs einen manuellen Abgleich vorzunehmen,
- der Regelkreis kostengünstig herstellbar ist, da keine Bauteile mit geringen Toleranzen der Bautereileparameter benötigt werden und da er in wesentlichen Teilen monolithisch integrierbar ist,
- eine optimale Impulsform der Regelgröße - d. h. möglichst steile Signalflanken, die zu keiner Instabilität führen - und somit ein zuverlässiger und stabiler Regelbetrieb gewährleistet wird.

Das erfindungsgemäße Verfahren läßt sich bestens zur Regelung der Abstrahlleistung einer im Impulsbetrieb arbeitenden Lichtquelle, insbesondere einer Laserdiode oder Leuchtdiode, einsetzen.

Die Erfindung wird nachfolgend anhand eines Ausführungsbeispiels unter Bezugnahme auf die Figuren näher beschrieben. Es zeigen:
- Figur 1: ein Ersatzschaltbild eines Regelkreises mit einem Verstärkungsregler zur Regelung der Schleifenverstärkung der Regelkreises,
- Figur 2: ein Impulsdiagramm zur Veranschaulichung des Regelverhaltens des Regelkreises aus Figur 1,
- Figur 3: ein Detailschaltbild des Regelkreises aus Figur 1.

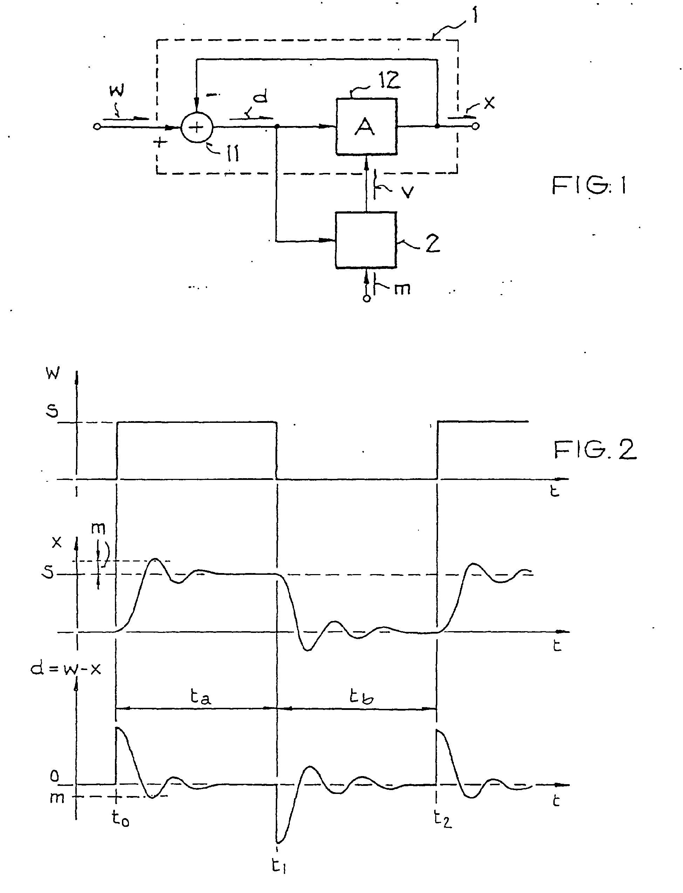

Gemäß Figur 1 umfaßt der Regelkreis 1 eine Sollwertvergleichsstufe 11 und eine dieser nachgeschaltete Regelstufe 12 mit mindestens zwei Polstellen. Die zu regelnde Regelgröße x und die den Sollwert der Regelgröße x bestimmende Führungsgröße w werden in der Sollwertvergleichsstufe 11 miteinander verglichen. Als Ausgangssignal liefert die Sollwertvergleichsstufe 11 eine die Abweichung des Istwertes der Regelgröße x vom Sollwert der Regelgröße x darstellende Regelabweichgröße d. Diese wird der Regelstufe 12 zugeführt, welche daraus nach Maßgabe ihrer Verstärkung A die Regelgröße x generiert. Die Regelabweichgröße d wird ferner einem Verstärkungsregler 2 zugeführt, welcher zudem mit einem vorgegebenen Toleranzwert m beaufschlagt wird und eine auf die Verstärkung A der Regelstufe 12, d. h. auf die Schleifenverstärkung des Regelkreises 1, einwirkende Verstärkungsregelgröße v erzeugt. Mit der Verstärkungsregelgröße v wird die Verstärkung A der Regelstufe 12 auf einen durch den Toleranzwert m vorgegebenen Wert geregelt. Der Verstärkungsregler 2 und die Regelstufe 12 bilden somit eine dem Regelkreis 1 überlagerte Regelschleife.

Die Regelabweichgröße d wird vorteilhafterweise als differentielles Signal bereitgestellt, da dann das Regelverhalten des Regelkreises 1 durch Schwankungen des Gleichstrom-Arbeitspunktes nicht oder nur unwesentlich beeinflußt wird.

Die Rückkopplung der Regelgröße x zur Sollwertvergleichsstufe 11 bewirkt eine Minimierung der Regelabweichgröße d, so daß die Regelgröße x dem durch die Führungsgröße w bestimmten Sollwert nachgeführt wird. Aufgrund gewünschter oder parasitärer Kapazitäten oder Induktivitäten sind die Verstärkung A der Regelstufe 12 und die Phasenverschiebung im Regelkreis 1 frequenzabhängig. Eine beispielsweise durch Temperaturänderungen oder Degradationserscheinungen bedingte Änderung der Schleifenverstärkung A würde daher zu einer Änderung des Einschwingverhaltens des Regelkreises 1 führen. Dies wird jedoch durch Regelung der Schleifenverstärkung A auf den durch den Toleranzwert m vorgegebenen und von Temperatureinflüssen oder Degradationserscheinungen unabhängigen Wert vermieden.

Gemäß Figur 2 kann ein sprunghafter Anstieg bzw. Abfall der Führungsgröße w ein überschwingen des Istwertes der Regelgröße x über den Sollwert s der Regelgröße x bewirken, bei dem der Istwert den Sollwert s zunächst um mehr als den einen maximal zulässigen wert darstellenden Toleranzwert m, beispielsweise 10% des Sollwertes s, überschreitet bzw. unterschreitet und dann gedämpft auf den Sollwert s einschwingt.

Im vorliegenden Beispiel wird das durch einen sprunghaften Anstieg der Führungsgröße bewirkte Überschwingen des Istwertes der Regelgröße x ausgewertet. Um einem übermäßigen, d. h. den Toleranzwert m überschreitenden, Überschwingen entgegenzuwirken, wird die Regelabweichgröße d im Verstärkungsregler 2 mit dem Toleranzwert m verglichen und, sobald der Istwert der Regelgröße x den Sollwert s um mehr als den Toleranzwert m überschreitet, die Schleifenverstärkung A des Regelkreises 1 durch die vom Verstärkungsregler 2 abgegebene Verstärkungsregelgröße v in dem Überschwingen entgegenwirkender Richtung variiert, d. h. reduziert. Falls der Istwert der Regelgröße x den Sollwert s hingegen um weniger als den Toleranzwert m oder gar nicht überschreitet, wird die Schleifenverstärkung A erhöht und somit das Überschwingen vergrößert. Auf diese weise wird die Schleifenverstärkung A derart geregelt, daß der Istwert der Regelgröße x um den Toleranzwert m über den Sollwert s überschwingt. Die Impulsantwort des Regelkreises 1 wird somit automatisch auf maximale Flankensteilheit bei maximal zulässigem Überschwingen optimiert und der Arbeitspunkt des Regelkreises 1 hierdurch stabilisiert.

Die Schleifenverstärkung A des Regelkreises 1 ist durch die Verstärkungsregelgröße v beispielsweise in diskreten Stufen variierbar. Sie wird dann, falls der Istwert der Regelgröße x um mehr bzw. weniger als der Toleranzwert m über den Sollwert s überschwingt, z. B. mit jedem Impuls der Führungsgröße w um eine Stufe reduziert bzw. erhöht bis der gewünschte Wert erreicht ist.

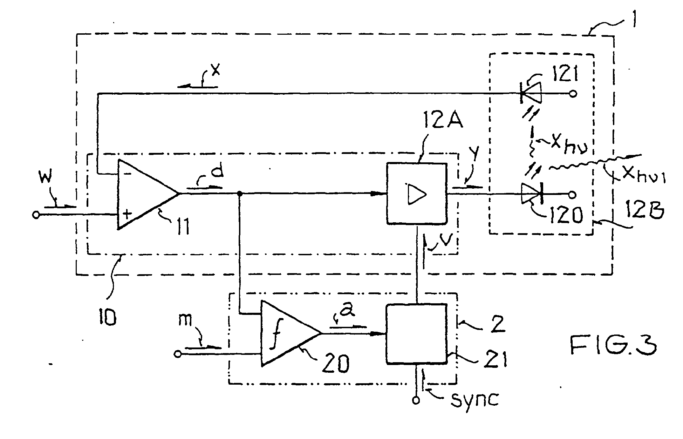

Gemäß Figur 3 weist der Regelkreis 1 eine Regeleinrichtung 10 mit der Sollwertvergleichsstufe 11 und dem Regelverstärker 12A sowie eine Regelstrekke 12B mit einer Laserdiode 120 und einem Photodetektor 121 auf. Der Regelverstärker 12A und die Regelstrecke 12B entsprechen der Regelstufe 12 aus Figur 1. Der Regelverstärker 12A erzeugt aus der Regelabweichgröße d die Stellgröße y, aus der die Regelstrecke 12B ihrerseits die Regelgröße x sowie als weitere Regelgröße das der Regelgröße x entsprechende optische Signal x_{hν} erzeugt, welches von der Laserdiode 120 abgestrahlt und von dem Photodetektor 121 detektiert wird. Aus der Regelstrecke 12B wird ein zum optischen Signal x_{hν} proportionales weiteres optisches Signal x_{hν1} als geregeltes Nutzsignal ausgekoppelt, dessen Leistung größer als die Leistung des zum Photodetektor 121 abgestrahlten optischen Signals x_{hν} ist und das im vorliegenden Beispiel das zu regelnde Signal darstellt.

Die Sollwertvergleichsstufe 11 ist als Differenzverstärker ausgeführt, der die Regelabweichgröße d als Differenz zwischen der Führungsgröße w und der rückgekoppelten Regelgröße x bildet und diese Differenz ggf. gleichzeitig verstärkt. Ferner ist der Regelverstärker 12A ist als bandbegrenzende Verstärkerstufe ausgeführt, beispielsweise als Tiefpaß- oder Integrationsstufe, und bestimmt somit im wesentlichen den Frequenzgang und Phasengang des Regelkreises 1.

Die Schleifenverstärkung A des Regelkreises 1 ist gleich der Gesamtverstärkung im Signalpfad des Regelkreises 1, d. h. gleich dem Produkt der Verstärkungen der im Signalpfad des Regelkreises 1 liegenden Schaltungsteile. Im vorliegenden Ausführungsbeispiel ist sie demnach gleich dem Produkt der Übertragungsfunktionen - d. h. der Verstärkungen - der Sollwertvergleichsstufe 11, des Regelverstärkers 12A und der Regelstrecke 12B und wird durch Variation der Verstärkung des Regelverstärkers 12A geregelt. Der verstärkungsregler 2 weist hierzu eine Komparatorstufe 20 auf, die eingangsseitig mit der Regelabweichgröße d und dem Toleranzwert m beaufschlagt wird und daraus eine dem Vorzeichen der Differenz zwischen dem Toleranzwert m und der Regelabweichgröße d entsprechenden Steuergröße a generiert. Der Verstärkungsregler 2 weist ferner eine der Komparatorstufe 20 nachgeschaltete und den Regelverstärker 12A ansteuernde Stelleinrichtung 21 auf, welche beispielsweise als Integrationsstufe ausgeführt ist und aus der Steuergröße a die zur Regelung der Verstärkung des Regelverstärkers 12A erforderliche Verstärkungsregelgröße v generiert.

Der Verstärkungsregler 2 wird durch ein Triggersignal sync zur Auswertung der Regelabweichgröße d aktiviert. Durch das Triggersignal sync - dieses kann die Führungsgröße w oder ein daraus abgeleitetes Signal sein - wird im vorliegenden Ausführungsbeispiel ein zwischen der steigenden und der darauffolgenden fallenden Signalflanke der Führungsgröße w, d. h. zwischen den Zeitpunkten t₀ und t₁ liegendes Zeitfenster tₐ als Auswertefenster definiert, in dem der Verstärkungsregler 2 aktiv ist. Außerhalb dieses Auswertefensters ist der Verstärkungsregler 2 inaktiv, so daß nur das durch einen positiven Sprung der Führungsgröße w bewirkte Überschwingen des Istwertes der Regelgröße x zur Regelung der Schleifenverstärkung A ausgewertet wird.

Mit dem Regelkreis 1 werden Schwankungen der Abstrahlleistung der Laserdiode 120 ausgeregelt und durch das Nachregeln der Verstärkung des Regelverstärkers 12A wird die durch diese Schwankungen bedingte Änderung der Impulsantwort des Regelkreises 1 korrigiert, so daß eine Verschiebung des Arbeitspunktes des Regelkreises 1 in einen ungünstigen Bereich vermieden wird. Hierzu wird im vorliegenden Ausführungsbeispiel das durch einen positiven Sprung der Führungsgröße w bewirkte Überschwingen des Istwertes der Regelgröße x über den Sollwert s der Regelgröße x zur Regelung der Schleifenverstärkung A ausgewertet; denkbar ist jedoch auch eine Auswertung des durch einen negativen Sprung der Führungsgröße w bewirkten Überschwingens der Regelgröße x. In diesem Fall ist das Vorzeichen des To-leranzwertes m zu invertieren und durch das Triggersignal sync das zwischen der fallenden und darauffolgenden steigenden Signalflanke der Regelgröße x, d. h. das zwischen den Zeitpunkten t₁ und t₂ liegende Zeitfenster t_{b} als Auswertefenster zur Auswertung der Regelabweichgröße d zu definieren.

Die vorliegende Schaltungsanordnung ist bestens für den Einsatz in einem Laufwerk für optische Speicherplatten, insbesondere für sogenannte (wiederbeschreibbare) "digital versatile disks" (DVDs), geeignet.

## Patentansprüche

1. Verfahren zur Regelung der Abstrahlungsleistung einer im Impulsbetrieb arbeitenden Lichtquelle, bei der eine Regelgröße (x) eines Regelkreises (1) geregelt wird, mit den Verfahrensschritten:
a. bereitstellen eines Regelkreises (1) mit einer Schleifenverstärkung (A);
b. dem Regelkreis wird eingangsseitig eine Führungsgröße (w), die einen Sollwert (s) der Regelgröße (x) bestimmt, zugeführt;
c. auswerten des durch eine Änderung der Führungsgröße (w) bewirkten Über-/Unterschwingens der Regelgröße (x);
d. im Falle einer sprunghaften Änderung der Führungsgröße (w) wird die Schleifenverstärkung (A) des Regelkreises (1) derart geregelt, dass sowohl bei einem betragsmäßigen Überschreiten wie auch bei einem betragsmäßigen Unterschreiten der Regelgröße (x) über bzw. unter einen vorgegebenen Toleranzwert (m) der Istwert der Regelgröße (x) um den Toleranzwert (m) über den Sollwert (s) überschwingt, so dass die Impulsantwort des Regelkreises (1) auf maximale Flankensteilheit bei maximal zulässigem Überschwingen optimiert wird.

2. Verfahren nach Anspruch 1, **dadurch gekennzeichnet, daß** die Schleifenverstärkung des Regelkreises (1) durch Regelung der Verstärkung eines vom Verstärkungsregler (2) angesteuerten Regel Verstärkers (12A) geregelt wird.

3. Verfahren nach einem der vorherigen Ansprüche, **dadurch gekennzeichnet, daß** der Toleranzwert (m) durch die Führungsgröße (w) vorgegeben wird.

4. Verfahren nach einem der vorherigen Ansprüche, **dadurch gekennzeichnet, daß** der Toleranzwert (m) bei einer Änderung der Führungsgröße (w) um einen zur Änderung der Führungsgröße (w) proportionalen Wert variiert wird.

5. Verfahren nach einem der vorherigen Ansprüche, **dadurch gekennzeichnet, daß** eine der Differenz zwischen dem Sollwert (s) und Istwert der Regelgröße (x) entsprechende Regelabweichgröße (d) mittels einer Sollwertvergleichsstufe (11) gebildet wird, und daß die Regelabweichgröße (d) im Verstärkungsregler (2) mit dem Toleranzwert (m) verglichen wird und die Schleifenverstärkung des Regelkreises (1) nach Maßgabe des Ergebnisses dieses Vergleichs gesteuert wird.

6. Verfahren nach Anspruch 5, **dadurch gekennzeichnet, daß** durch ein Triggersignal (svnc) ein zwischen zwei aufeinanderfolgenden Signalflanken der Regelgröße (x) liegendes Zeitfenster (tₐ) als Auswertefenster definiert wird, in dem die Regelabweichgröße (d) zur Regelung der Schleifenverstärkung (A) ausgewertet wird.

7. Schaltungsanordnung zur Durchführung des Verfahrens nach einem der Ansprüche 1 bis 6 mit einer Regeleinrichtung (10) zur impulsförmigen Ansteuerung der Abstrahlungsleistung einer Lichtquelle (120) und eines Photodetektors (121) umfassenden Regelstrecke (12B), wobei die Regeleinrichtung (10) zur Ansteuerung der Regelstrecke (12B) eine eingangsseitige Sollwert-Vergleicherstufe (11) und einen der Sollwert-Vergleicherstufe (11) nachgeschalteten Regelverstärker (12a) aufweist, die ausgangsseitig ein Ausgangssignal (g) bereitstellt, eine Regelstrecke (12b) zur Erzeugung der Regelgröße (x) vorgesehen ist, die eingangsseitg mit dem Ausgang des Regelverstärkers (12a) gekoppelt ist und die die Regelgröße (x) einem Eingang der Sollwert-Vergleicherstufe (11) zuführt, ein Verstärkungsregler (2) vorgesehen ist, der eine Komparatorstufe (20) sowie eine der Komparatorstufe (20) nachgeschaltete Stelleinrichtung (21) aufweist, wobei die Komparatorstufe (20) eine Differenz zwischen einem Toleranzwert (m) und einer von der Sollwert-Vergleicherstufe (11) ausgangsseitig bereitgestellten Regelabweichgröße (d) berechnet und abhängig von der Differenz aus Toleranzwert (m) und Regelabweichgröße (d) eine entsprechende Steuergröße (a) ausgibt und wobei die Stelleinrichtung (21) aus der Steuergröße (a) und einem Triggersignal (sync) ein Verstärkungssteuerungssignal (v) zur Steuerung der Verstärkung des Regelverstärkers (12a) erzeugt, wobei das Triggersignal (sync) ein Zeitfenster (ta) als Auswertefenster für die Regelung definiert, in dem der Verstärkungsregler (2) aktiv ist.

8. Schaltungsanordnung nach Anspruch 7, **dadurch gekennzeichnet, daß** der Regelverstärker (12A) als bandbegrenzende Verstärkerstufe ausgeführt ist.

9. Schaltungsanordnung nach Anspruch 8, **dadurch gekennzeichnet, daß** der Regelverstärker (12A) als Tiefpaß- oder Integratorstufe ausgeführt ist.

10. Schaltungsanordnung nach einem der Ansprüche 7 bis 9, **dadurch gekennzeichnet, daß** die Regelstrecke (12B) eine durch den Regelverstärker (12A) angesteuerte Lichtquelle (120) zur Erzeugung eines optischen Signals (xην) sowie einen Photodetektor (121) Erzeugung der dem optischen Signal (xην) entsprechenden Regelgröße (x) aufweist.

11. Schaltungsanordnung nach Anspruch 10, **dadurch gekennzeichnet, daß** die Lichtquelle (120) als Laserdiode ausgeführt ist.

12. Verwendung des Verfahrens nach einem der Ansprüche 1 bis 6 zur Regelung der Abstrahlleistung von gepulst betriebenen Lichtquellen (120).

13. Verwendung nach Anspruch 12 zur Regelung der Abstrahlleistung von Laserdioden (120) oder Leuchtdioden.

## Claims

1. Method for regulation of the radiation output of a light source operating in pulsed operation, in which a regulating variable (x) of a regulating circuit (1) is regulated, comprising the method steps:
a. providing a regulating circuit (1) with a loop amplification (A);
b. a reference variable (w), which determines a target value (s) of the regulating variable (x), is fed to the regulating circuit;
c. evaluating the overshoot/undershoot of the regulating variable (x) caused by a change in the reference variable (w);
d. in the case of an abrupt change in the reference variable (w) the loop amplification (A) of the regulating circuit (1) is regulated in such a manner that not only when the regulating variable (x) exceeds in terms of amount, but also when the regulating variable (x) falls below in terms of amount a predetermined tolerance value (m) the actual value of the regulating variable (x) overshoots the target value (s) by the tolerance value (m) so that the pulse response of the regulating circuit (1) is optimised to maximum flank steepness with maximum permissible overshooting.

2. Method according to claim 1, **characterised in that** the loop amplification of the regulating circuit (1) is regulated by regulation of the amplification of a regulating amplifier (12A) controlled in drive by an amplification regulator (2).

3. Method according to one of the preceding claims, **characterised in that** the tolerance value (m) is predetermined by the reference variable (w).

4. Method according to one of the preceding claims, **characterised in that** the tolerance value (m) in the case of a change in the reference variable (w) is varied by a value proportional to the change in the reference variable (w).

5. Method according to one of the preceding claims, **characterised in that** a regulation deviation variable (d) corresponding with the difference between the target value (s) and actual value of the regulating magnitude (x) is formed by means of a target value comparison stage (11) and that the regulation deviation variable (d) is compared in the amplification regulator (2) with the tolerance value (m) and the loop amplification of the regulating circuit (1) is controlled in dependence on the result of this comparison.

6. Method according to claim 5, **characterised in that** a time window (tₐ) lying between two successive signal flanks of the regulating variable (x) is defined as an evaluating window by a trigger signal (sync) **in that** the regulation deviation variable (d) is evaluated for regulation of the loop amplification (A).

7. Circuit arrangement for carrying out the method according to one of claims 1 to 6 with regulating equipment (10) for pulse-shaped drive control of the radiation output of a light source (120) and a regulating path (12B) comprising a photodetector (121), wherein the regulating equipment (10) for drive control of the regulating path (12B) comprises an input target value comparison stage (11) and a regulating amplifier (12a), which is connected downstream of the target value comparison stage (11) and which provides an output signal (g) at the output side, a regulating path (12b) for generating the regulating variable (x) is provided, which path is coupled at the input with the output of the regulating amplifier (12a) and feeds the regulating variable (x) to an input of the target value comparison stage (11), an amplifying regulator (2) is provided, which comprises a comparator stage (20) as well as a setting device (21) connected downstream of the comparator stage (20), wherein the comparator stage (20) calculates a difference between a tolerance value (m) and a regulation deviation variable (d) provided at the output side by the target value comparison stage (11) and, depending on the difference of tolerance value (m) and regulation deviation variable (d), issues a corresponding control variable (a), and wherein the setting device (21) generates from the control variable (a) and a trigger signal (sync) an amplification control signal (v) for controlling the amplification of the regulating amplifier (12a), wherein the trigger signal (sync) defines a time window (tₐ) as evaluating window for the regulation, in which the amplifying regulator (2) is active.

8. Circuit arrangement according to claim 7, **characterised in that** the regulating amplifier (12A) is constructed as a band-limiting amplifier stage.

9. Circuit arrangement according to claim 8, **characterised in that** the regulating amplifier (12A) is constructed as a low-pass stage or an integrator stage.

10. Circuit arrangement according to one of claims 7 to 9, **characterised in that** the regulating path (12B) comprises a light source (120), which is controlled in drive by the regulating amplifier (12A), for producing an optical signal (xην) as well as a photodetector (121) for generating the regulating variable (x) corresponding with the optical signal (xην).

11. Circuit arrangement according to claim 10, **characterised in that** the light source (120) is constructed as a laser diode.

12. Use of the method according to one of claims 1 to 6 for regulation of the radiation output of light sources (120) with pulsed operation.

13. Use according to claim 12 for regulation of the radiation output of laser diodes (120) or light-emitting diodes.

## Revendications

1. Procédé de réglage de la puissance de rayonnement d'une source lumineuse travaillant en mode impulsionnel, dans lequel on détermine la valeur de régulation (x) d'un circuit de régulation (1), comprenant les étapes suivantes :
a) mise à disposition d'un circuit de régulation (1) comportant une amplification de boucle (A) ;
b) introduction dans le circuit de régulation, côté entrée, d'une valeur de commande (w) déterminant une valeur de consigne (s) de la valeur de régulation (x) ;
c) exploitation du dépassement positif ou négatif de la valeur de régulation (x) provoqué par une modification de la valeur de commande (w) ;
d) dans le cas d'une modification brusque de la valeur de commande (w), on établit la valeur de l'amplification de boucle (A) du circuit de régulation (1) de telle façon que, aussi bien dans le cas d'un dépassement positif en valeur que d'un dépassement négatif en valeur de la valeur de régulation (x) au-dessus ou en-dessous d'une valeur de tolérance (m), la valeur réelle de la valeur de régulation (x) dépasse la valeur de consigne (s) de la valeur de tolérance (m), de sorte que la réponse impulsionnelle du circuit de régulation (1) est optimisée à une raideur de flanc maximale pour un dépassement maximum autorisé.

2. Procédé selon la revendication 1, **caractérisé en ce que** l'amplification de boucle du circuit de régulation (1) est commandée par régulation de l'amplification d'un amplificateur de régulation (12A) piloté par le régulateur d'amplification (2).

3. Procédé selon l'une quelconque des revendications précédentes, **caractérisé en ce que** la valeur de tolérance (m) est prédéfinie par 1a valeur de commande (w).

4. Procédé selon l'une quelconque des revendications précédentes, **caractérisé en ce qu'**en cas de modification de la valeur de commande (w), la valeur de tolérance (m) subit une variation d'une valeur proportionnelle à la modification de la valeur de commande (w).

5. Procédé selon l'une quelconque des revendications précédentes, **caractérisé en ce que** par une étape de comparaison de la valeur de consigne (11), on constitue une unité d'écart de régulation (d) correspondant à la différence entre la valeur de consigne (s) et la valeur réelle de la valeur de régulation (x), et **en ce que** l'on compare l'unité d'écart de régulation (d) à la valeur de tolérance (m) dans le régulateur d'amplification (2), et que l'amplification de boucle du circuit de régulation (1) est commandée en fonction du résultat de cette comparaison.

6. Procédé selon la revendication 5, **caractérisé en ce que** par un signal de synchronisation (svnc) on définit comme fenêtre d'exploitation une fenêtre temporelle (tₐ) située entre deux flancs du signal de la grandeur de régulation (x), dans laquelle l'unité d'écart de régulation (d) est exploitée pour régler l'amplification de la boucle (A).

7. Circuit pour réaliser le procédé selon l'une quelconque des revendications 1 à 6 comprenant un dispositif de régulation (10) pour piloter de façon impulsionnelle la puissance de rayonnement d'une source lumineuse (120) et d'une excursion de régulation (12B) comprenant un photodétecteur (121), dans lequel le dispositif de régulation (10) pour piloter l'excursion de régulation (12B) présente un étage de comparaison de valeur de consigne (11) disposé du côté entrée et un amplificateur de régulation (12a) monté en aval de l'étage de comparaison de valeur de consigne (11) qui délivre en sortie un signal de sortie (g), une excursion de régulation (12b) pour générer la valeur de régulation (x), qui est couplée du côté entrée à la sortie de l'amplificateur de régulation (12a) et amène la valeur de régulation (x) à une entrée de l'étage de comparaison de valeur de consigne (11), dans lequel on prévoit un régulateur d'amplification (2), qui présente un étage comparateur (20) ainsi qu'un dispositif de régulation (21) monté en aval de l'étage comparateur (20), dans lequel l'étage comparateur (20) calcule une différence entre une valeur de tolérance (m) et une unité d'écart de régulation (d) délivrée en sortie par l'étage comparateur de valeur de consigne (11), et fournit une valeur de commande (a) correspondante en fonction de la différence entre la valeur de tolérance (m) et l'unité d'écart de régulation (d), et dans lequel le dispositif de régulation (21) génère à partir de la grandeur de commande (a) et d'un signal de synchronisation (sync) un signal de régulation d'amplification (v) pour commander l'amplification de l'amplificateur de régulation (12a), dans lequel le signal de synchronisation (sync) définit une fenêtre temporelle (tₐ) comme fenêtre d'exploitation pour la régulation, dans laquelle le régulateur d'amplification (2) est actif.

8. Circuit selon la revendication 7, **caractérisé en ce que** l'amplificateur de régulation (12A) est un étage amplificateur passe-bande.

9. Circuit selon la revendication 8, **caractérisé en ce que** l'amplificateur de régulation (12A) est un étage passe-bas ou intégrateur.

10. Circuit selon l'une quelconque des revendications 7 à 9, **caractérisé en ce que** l'excursion de régulation (12B) présente une source lumineuse (120) pilotée par l'amplificateur de régulation (12A) pour générer un signal optique (xηv) ainsi qu'un photodétecteur (121) pour générer la valeur de régulation (x) correspondant au signal optique (xηv).

11. Circuit selon la revendication 10, **caractérisé en ce que** la source lumineuse (120) est une diode laser.

12. Utilisation du procédé selon l'une quelconque des revendications 1 à 6 pour régler la puissance de rayonnement de sources lumineuses (120) à fonctionnement impulsionnel.

13. Utilisation selon la revendication 12 pour régler la puissance de rayonnement de diodes laser (120) ou de diodes luminescentes.
